# EUROPÄISCHE PATENTSCHRIFT

(11) **EP 1 261 814 B1**
(45) Veröffentlichungstag und Bekanntmachung des Hinweises auf die Patenterteilung: **28.04.2004**
(21) Anmeldenummer: 01911687.0
(22) Anmeldetag: 22.02.2001
(51) Int. Cl.: F16H 49/00, F16H 25/06

(54) **WELLGETRIEBE UND INNENRAD FÜR EIN SOLCHES GETRIEBE**
HARMONIC DRIVE AND INTERNAL GEARED WHEEL FOR A DRIVE OF THIS TYPE
REDUCTEUR A PLANETAIRE ET ROUE A DENTURE INTERIEURE DESTINEE A CE DERNIER

(30) Priorität: 04.03.2000 DE 10010156
(43) Veröffentlichungstag der Anmeldung: 04.12.2002
(73) Patentinhaber: Oechsler Aktiengesellschaft, 91522 Ansbach (DE)
(72) Erfinder: RUTTOR, Martin, 91522 Ansbach (DE)
(86) Internationale Anmeldenummer: PCT/EP2001/002025
(87) Internationale Veröffentlichungsnummer: WO 2001/066974

(56) Entgegenhaltungen:
- EP-A- 0 974 773
- US-A- 2 966 808

## Beschreibung

Die Erfindung betrifft ein Wellgetriebe und ein Innenrad für ein solches Getriebe gemäß dem jeweiligen Oberbegriff der Hauptansprüche.

Aus der DE-PS 1 182 011 (& US-A-2 966 808) ist ein solches Wellgetriebe mit einem Innenrad bekannt, das aus einer Gliederkette von Zahnsegmenten besteht, die eine federnde Stahlhülse umschließt, welche ihrerseits über Lagerrollen auf einem Nocken getragen wird, der über eine in seinem Innern gelegene, mittels einer zentralen Welle angetriebenen Planetenrad-Anordnung in Rotation versetzt wird.

Die. Funktion eines solchen - auch als Harmonie Drive oder als Ringband-Getriebe bekannten - Wellgetriebes als sehr stark untersetzendem, selbsthemmendem System mit zur Antriebswelle koaxialer Abtriebswelle beruht darauf, daß ein rotierender sogenannter Well-Generator (nämlich dort der Nocken) einen auch als Flexband bezeichneten Innenrad-Reifen (dort die Kette, deren Kettenglieder auf ihren Außenbögen gezahnt sind) umlaufend radial verformt und dadurch die Außenmantelfläche dieser Felge umlaufend lokal nach außen gegen die hohlzylindrische Innenmantelfläche geringfügig größeren Umfanges eines stationären, formstabilen Stützrings andrückt. Infolgedessen wälzt sich das Innenrad selbst oder sein darauf als verdrehbare Felge gelagerter Radreifen kraftschlüssig über Reibflächen oder (wie dort) formschlüssig über Verzahnungen im Stützring ab, wobei das Rad bzw. sein Reifen sich nach Maßgabe der Umfangsdifferenz langsamer als der motorisch angetriebene Triebkern des Wellgenerators dreht.

Diese gegenüber dem Antrieb stark verlangsamte Drehbewegung wird vorzugsweise über die Außenverzahnung des felgenförmigen Reifens auf die Innenverzahnung eines weiteren Außenringes, des zum Stützring konzentrischen aber nicht stationären Abtriebsringes übertragen, wobei noch eine weitere Untersetzung der Drehgeschwindigkeit infolge unterschiedlichen Umfanges (Zähnezahl) erfolgen kann. Der Antrieb des Well-Generators erfolgt üblicherweise über einen koaxial angeflanschten hochtourigen und deshalb sehr preiswert verfügbaren Kleinspannungs-Gleichstrommotor, dessen Rotation so in eine sehr viel langsamere Drehbewegung entsprechend größeren Drehmomentes untersetzt wird.

Bei den vom Deutschen Gebrauchsmuster 2 96 14 738 bekannten und in dem Beitrag "Genial einfach" von H. Hirn (KEM Antriebstechnik Heft 11/1996) näher beschriebenen Ausführungsformen weist das Wellgetriebe keine geräuschvollen, verschleißanfälligen und hinsichtlich der vielen zu montierenden Einzelteile teuren Ketten- und Planetenradkonstruktionen auf, sondern es besteht aus extrem wenigen Kunststoff-Spritzgußteilen. Als Wellgenerator wird ein unrunder (im Axial-Querschnitt etwa dreieckförmiger oder bevorzugt ovaler) Triebkern konzentrisch in der Nabe eines radial verformbaren Innenrades gedreht. Formstabile Speichen zwischen der vom Triebkern radial verformten Nabe und dem ebenfalls radial verformbaren, außen verzahnten Reifen dieses Innenrades bewirken, daß dessen Außenverzahnung entsprechend ihrer umlaufenden radialen Verformung jeweils nur über ein darin abwälzendes begrenztes Bogenstück mit der Innenverzahnung des Stützringes in Eingriff gerät. Zur Verringerung der wärmeerzeugenden Reibung zwischen der Paarung der relativ zueinander rotierenden Kunststoff-Mantelflächen von einerseits dem Triebkern und andererseits der Innenrad-Nabe kann ein Gleitlager in Form einer metallenen Manschette eingefügt sein, die sich unter Einfluß des darin verdrehten exzentrischen Triebkernes ebenfalls umlaufend exzentrisch verformt (also keine Trägerfunktion für darauf ruhende gezahnte Kettenglieder gemäß dem gattungsbildenden Getriebe aufweist). Diese bei der Kunststoffkonstruktion zwischengefügte Gleitlagerung verteilt die Relativdrehung zwischen Triebkern und Innenrad-Nabe auf zwei Stufen und führt im übrigen schon aufgrund der allgemein günstigeren Reibungsverhältnisse von Kunststoff gegenüber Metall zu einer Verringerung der Reibungsverluste, also auch der verlustbedingten Erwärmung innerhalb dieses praktisch vollständig aus Kunststoff-Spritzgußteilen kleinbauend erstellten, hermetisch gekapselten Wellgetriebes. Allerdings werden hohe Ansprüche an die Wechselbeanspruchbarkeit der sich ständig unter Last verformenden Manschette gestellt, und ihr Einbau in ein solches Wellgetriebe kleiner Abmessungen führt zu einer spürbaren Erhöhung des Fertigungsaufwandes. Angesichts des hohen Untersetzungsverhältnisses eines solchen Wellgetriebes kann es darüber hinaus immer noch zu einem funktionskritischen Wärmestau vor allem im Triebbereich kommen.

Die Weiterbildung solchen Wellgetriebes gemäß der DE 1 98 33 290 C1 (& EP 0 974 773 A) befaßt sich mit einer Eindämmung der Geräuschentwicklung infolge der umlaufenden Verlagerung diskreter Pulsatoren, hier als Stößel bezeichnet, (anstelle der rotierenden Verformung der geschlossenen Nabe eines Speichen-Rades) auf dem unrunden Wellgenerator. Indem die Füße der einzelnen Stößel nicht massiv, sondern gespalten sind, sollen sie sich zur ständigen Anlage gegen den Triebkern des Wellgenerators elastisch verbiegen können. Eine periphere Verbindung der einander benachbarten Stößel über das im Vergleich zu deren Durchmessern dünne flexible, auf seiner Außenfläche mit dem geschlossen umlaufenden Zahnkranz ausgebildeten Ringband soll derart ausgelegt sein, daß sich eine Federwirkung einstellt, mittels derer die Stößel-Füße - auch im Zuge momentaner Durchmesserverringerung beim Herausdrehen des im Querschnitt ovalen Triebkerns aus dem Winkelbereich seines größten Durchmessers - vom ihnen gegenüberliegenden Zahnkranz her immer satt in radiale Anlage gegen den unrunden Wellgenerator gedrückt werden, um dadurch ein geräuscherzeugendes radiales Zurückspringen aus einer noch radial abgehobenen Verschiebestellung heraus zu unterbinden.

Bei diesen bekannten, im Kunststoff-Spritzguß erstellten kleinbauenden Wellgetrieben, die gewöhnlich hochtourigen und deshalb preiswert verfügbaren Kleinspannunas-Gleichstrommotoren nachgeschaltet sind, ist das Innenrad also ein einstückiges Spritzgußteil mit formstabilen speichenartig radial orientierten Stößeln zwischen einer radial verformbaren Nabe und dem ebenfalls radial verformbaren, außen verzahnten Reifen, was eine technologisch anspruchsvolle Spritzgußtechnik wegen der im Radialschnitt sehr unterschiedlichen Materialeigenschaften bedingt. Dabei erweist es sich auch als wirtschaftlich nachteilig da kostspielig, wenn ― etwa zur Anpassung an konkret auftretende getriebliche Anforderungen durch Austausch von Innenrädern unterschiedlichen Umfanges - unterschiedlich bemessene Varianten verfügbar gehalten werden müssen.

Der Erfindung liegt deshalb die technische Problemstellung zugrunde, unter Beibehaltung ihrer apparativen und anwendungsorientierten Vorteile die vorbekannten Wellgetriebe dahingehend weiterzuentwickeln, daß ihr Aufbau vereinfacht wird, um vor allem durch eine günstigere Ausgestaltung des Innenrades unter Reduzierung der Herstellungskosten diesbezüglich flexibler werden zu können.

Gelöst ist diese Aufgabenstellung erfindungsgemäß dadurch, daß das gattungsgemäße Wellgetriebe bzw. sein Innenrad mit den Merkmalen des jeweiligen Hauptanspruches ausgelegt ist. Danach sind gewissermaßen die Idee der Zahnsegmente aus der gattungsbildenden Kettenkonstruktion, die allerdings überhaupt keine praktischer Bedeutung erlangt hat, mit der Idee der Speichen aus der ebenfalls vorbekannten, konstruktiv aber ganz anders gearteten Spritzgußausbildung, die in die apparative Praxis Eingang gefunden hat, miteinander in erfinderischer Weise dahingehend kombiniert, daß das Innenrad aus einer variierbaren Anzahl von separat erstellten Stößeln untereinander gleicher Geometrie zusammengesetzt ist, die mit dem Fußende ihres Schaftes angenähert radial auf der Außenmantelfläche des Triebkernes abgestützt sind und gegenüberliegend radial elastisch stauchbare Köpfe aufweisen, von denen nur diejenigen, die in Verlängerung eines der größeren Radien des Wellgenerators liegen und deshalb aus einem gedachten Kreisbogen radial etwas nach außen verschoben sind, satt gegen die hohlzylindrische Innenmantelfläche der einander axial benachbarten Außenringe (Stützring und Abtriebsring) anliegen. Die Außenverzahnung des Innenrades kann unmittelbar auf der Außenmantelfläche der distanziert einander benachbarten Schaft-Köpfe ausgebildet sein; oder die Schaft-Köpfe dienen als Träger eines sich in Umfangsrichtung darüber erstreckenden, separaten Flexbandes mit Außenverzahnung. In letzterem Falle kann sich das Flexband über dem Innenrad abwälzen, das Innenrad selbst braucht sich dann also nicht auch um die Getriebeachse zu drehen.

Etwa mittig querab weist der Schaft eines jeden Stößels zwei kurze Arme auf, die in Anschlußprofilen für gelenkige Kopplung mit den peripher benachbarten Armen von den beiderseits benachbarten Stößeln enden. Dadurch weist jeder der Stößel, aus denen das Innenrad zusammengesetzt ist, im Querschnitt bezüglich der Getriebe-Achse eine weströmische Kreuzesform mit oberhalb des Vertikalbalkens ausgebildeter dreieckförmiger Aufweitung zum Stößel-Kopf auf.

Das mechanisch hoch beanspruchte Innenrad eines Wellgetriebes ist also erfindungsgemäß nun aus einzelnen untereinander gleichen, im wesentlichen massiven radialen Stößeln, die jeder mit einem elastisch radial stauchbaren hohlen Kopf ausgestattet sind, mittels paarweise verbindbarer ― vorzugsweise unterschiedlicher aber einander komplementär ergänzender ― seitlicher Anschlußprofile verschwenkbar gelenkig zusammengesetzt. Die Stößelgeometrie ist technologisch unkritisch im Kunststoff-Spritzguß aus steifem thermoplastischem Werkstoff geringer Dichte mit hoher Maßhaltigkeit preisgünstig in großer Stückzahl herstellbar, so daß das aus einer variierbaren Anzahl von Stößeln montierbare Innenrad sich auch durch geringe Masseträgheit auszeichnet. Jeder der in seiner Längsrichtung verlagerbaren Stößel weist beim auf dem Wellgenerator etwa radial abgestützten Fuß aufgrund der Materialpaarung gutes Gleitreibungs- und Verschleißverhalten auf und verfügt insbesondere im Fußbereich über große Wärmeformbeständigkeit.

Bezüglich weiterer Einzelheiten und zusätzlicher Weiterbildungen der Erfindung wird auf die nachstehende Beschreibung eines bevorzugten Realisierungsbeispiels zur erfindungsgemäßen Lösung und auf die weiteren Ansprüche sowie ergänzend, insbesondere hinsichtlich der Wellgenerator-Abstützung, auf unsere beiden heutigen Parallelanmeldungen mit gleicher Bezeichnung verwiesen.

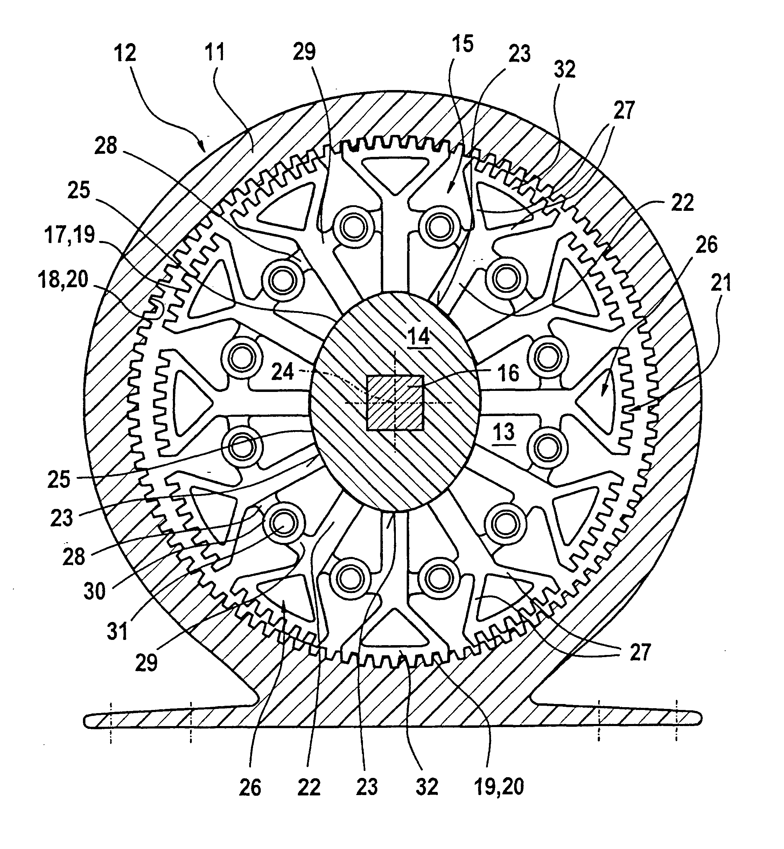

Die einzige Figur der vorliegenden Zeichnung stellt angenähert maßstabsgerecht vergrößert aber unter Beschränkung auf das Funktionswesentliche eine Stimansicht gegen das erfindungsgemäß aus einer Vielzahl einzelner, untereinander gleicher Stößel erstellte Innenrad eines Wellgetriebes innerhalb seines stationären Stützringes dar.

Zeichnerisch veranschaulicht ist ein Axialschnitt durch den gehäusefesten Stützring 11 eines Wellgetriebes 12 unmittelbar vor dem Stirnende 13 seines koaxial vom formstabil unrunden Triebkern 14 axial durchsetzten, radial verformbaren und in diesem Beispiel außen verzahnten Innenrades 15. In den üblicherweise im Querschnitt wie gezeigt ovalen, gegenüber dem Innenrad 15 konzentrisch verdrehbaren Triebkern 14 seinerseits greift wieder koaxial aber nun drehfest eine Antriebswelle 16 ein, bei der es sich unmittelbar um die verlängerte Motorwelle eines Antriebsorganes handeln kann (in der Schnittdarstellung nicht sichtbar, etwa als Elektro- oder Fluidmotor konzentrisch über der Zeichenebene gelegen). Das vom Triebkern 14 im Querschnitt unrund verzerrte Innenrad 15 steht nur in Verlängerung der größeren Radien des Triebkerns 14 längs des dort hinreichend weit radial nach außen verlagerten Bogenstückes seiner Außenmantelfläche 17 kraft oder wie skizziert über eine radiale Verzahnung 19 / 20 formschlüssig mit der formstabil hohlzylindrischen Innenmantelfläche 18 des stationären Stützringes 11 in Drehverbindung. Das Innenrad 15 samt Triebkern 14 erstreckt sich axial unter der Zeichenebene noch in einen weiteren, dem in der Zeichnung sichtbaren Stützring 11 axial benachbarten Außenring hinein, der nun aber nicht stationär angeordnet sondern als koaxialer Abtriebsring dieses sehr stark untersetzenden Getriebes 12 von der Verzahnung 19 des Innenrades 15 mitdrehbar gelagert ist.

Dieses axial lange und radial breite. radial verformbare Innenrad 15 ist aus einer Anzahl untereinander gleicher, kreisringförmig nebeneinanderliegend beweglich miteinander verbundener einzelner Stößel 21 zusammengefügt. Jeder dieser Stößel 21 besteht vor allem aus einem quaderförmigen, sich etwa über die axiale Länge des Triebkerns 14 erstreckenden Schaft 22, der mit seinem Fuß 23 längs der Erzeugenden und in Bezug auf die Geräte-Achse 24 radial auf der im Querschnitt unrunden Außenmantelfläche 25 des Triebkerns 14 abgestützt ist. Dem freien Stirnende des Fußes 23 gegenüber endet jeder Schaft 22 in einem diesem gegenüber vor allem radial elastisch stauchbaren Kopf 26. Der hat im wesentlichen die Querschnittsform eines sich achsparallel über die Länge des Triebkerns 14 und damit über die achsparallele Tiefe des Schaftes 22 erstreckenden Hohlzylinder-Ausschnittes mit biegeweichen Übergängen an den Enden seiner dem Fuß 23 des Schaftes 22 gegenüberliegend sich anschließenden sektoriellen Seitenwände 27. Diese werden federnd etwas peripher gespreizt, wenn eine dieses radiale Wandungspaar 27-27 stirnseitig verbindende Bogenwand 32 des Kopfes 26 infolge Anpressens gegen den Stützring 11 radial etwas gestaucht (und dadurch abgeflacht) wird, so daß die Verzahnung 19/20 hier desto zuverlässiger in Eingriff gerät. Bei diesem Ausführungsbeispiel wird also vom Innenrad 15 kein umlaufendes Flexband getragen, sondern die distanzierte Folge der Bogenwände 32 wirkt selbst als unterbrochener, mit entsprechend segmentierter Außenverzahnung 19 ausgestatteter, drehstarr mit dem Innenrad 15 verbundener Radreifen.

Die seitliche Abstützung der Stößel 21 in peripherer Folge gegeneinander und damit zugleich deren kreisförmige Positionierung und bewegliche Verbindung zum zusammengesetzten Innenrad 15 erfolgt mittels seitlich einander gegenüber an den Schaft 22 vorzugsweise einstückig angeformter kurzer Arme 28 - 29, die jeweils in axial gegeneinander versetzten Anschlußprofilen 30, 31 enden. Wenn es sich bei diesen um achsparallel orientierte Ringe handelt, die dadurch jeweils paarweise übereinander zu liegen kommen, dann können diese einfach durch einen achsparallel hindurchgeführten Schwenkzapfen gelenkig miteinander verbunden werden, und aus dem zunächst losen Verbund einer größeren Anzahl von dann kettengliedförmig aneinandergelenkten Stößeln 21 ist das in der Axialquerschnittsebene in Grenzen verformbare Innenrad 15 großer axialer Länge und großer radialer Dicke geworden. Dessen Umfang läßt sich in gewissem Maße zur Anpassung an den Durchmesser der Innenmantelfläche 18 eines vorgegebenen Stützringes 11 durch die Anzahl miteinander zum Innenrad 15 zu verbindender Stößel 21 variieren. Daß dabei der Außenbogen des Stößel-Kopfes 23 nicht immer auf einem zu jener Innenmantelfläche 18 konzentrischen Bogen liegt, stört nicht, da im Bereich des Verzahnungseingriffes 19-20 der Kopf 26 ja unter Verformung seiner Bogenwand 32 radial in die Innenmantelfläche 18 hineingedrückt wird und dadurch stets guten Mitnahme-Formschluß 19/20 erbringt

Noch einfacher und deshalb fertigungstechnisch ebenfalls günstig automatisierbar gestaltet sich eine direkt steckbare, etwa druckknopfartige Verbindung zwischen den einander benachbarten Stößeln 21 zum Innenrad 15. Dafür ist jeder Stößel 21 mit einem bezüglich der Zeichenebene z.B. untenliegenden oder unten endenden Arm 28 und einem bezüglich der Zeichenebene darüber gelegenen oder darüber endenden weiteren Arm 29 ausgestattet, die sich jeder über z.B. knapp die Hälfte der zur Geräteachse 24 parallelen Länge des Stößels 21 erstrecken. Der eine Arm 28 ist an seinem freien Ende mit einem achsparallelen Sackloch als Anschlußprofil 30, der andere Arm 29 als Anschlußprofil 31 mit einem achsparallelen Stift zum Eingriff in jenes Loch ausgestattet. Dann brauchen für die Montage zum Innenrad 15 nur die Stößel 21 nacheinander mit ihrem Stift parallel zur Achse 24 in das Loch des schon vorliegenden Stößels 21 (oder umgekehrt) eingesteckt zu werden, um die Gliederkette aus den Stößeln 21-21 zu bilden und diese schließlich zum kettenringförmigen Innenrad 15 zu schließen.

## Patentansprüche

1. Wellgetriebe (12) mit einem um seine Achse (24) rotierenden Triebkern (14) unrunden Querschnittes zum koaxialen Abwälzen einer ihn umgebenden, radial verformbaren radreifenförmigen Folge von miteinander gelenkig verbundenen Bögen in einem formstabilen Stützring (11) etwas größeren Durchmessers, **dadurch gekennzeichnet, daß** aus einzelnen speichenförmig radial orientierten Stößeln (21) ein Innenrad (15) zusammengesetzt ist, dessen Stößel-Schäfte (22) mit Füßen (23), die sich quer zur Achse (24) auf der Außenfläche (25) des Triebkerns (14) abstützen, gegenüberliegend mit Köpfen (26), die jeweils eine Bogenwand (32) aufweisen, und etwa mittig dazwischen mit Anschlußprofilen (30, 31) ausgestattet sind, die für wechselseitige gelenkige Verbindungen der Stößel (21) untereinander seitlich in peripherer Richtung vorkragen.

2. Wellgetriebe nach Anspruch 1, **dadurch gekennzeichnet, daß** beiderseitige Anschlußprofile (30, 31) eines Stößels (21) parallel zur Dreh-Achse (24) gegeneinander versetzt an den freien Stirnenden von im Verhältnis zur radialen Länge der Stößel (21) kurzen peripher vorkragenden Armen (28, 29) im Mittenbereich der Stößel (21) ausgebildet sind.

3. Wellgetriebe nach dem vorangehenden Anspruch, **dadurch gekennzeichnet, daß** die Anschlußprofile (30, 31) Ringe zur Aufnahme eines Schwenkzapfens sind.

4. Wellgetriebe nach dem vorvorangegangenen Anspruch, **dadurch gekennzeichnet, daß** die Anschlußprofile (30, 31) eines Stößels (21) einerseits ein achsparalleles Loch und andererseits ein achsparalleler Stift zum Eingriff in ein solches Loch sind.

5. Wellgetriebe nach einem der vorangehenden Ansprüche, **dadurch gekennzeichnet, daß** der jeweilige Schaft (22) dem der Dreh-Achse (24) des Triebkerns (14) und des Innenrades (15) zugewandten Fuß (23) gegenüber mit einem peripher sich aufweitenden, radial bezüglich der Dreh-Achse (24) elastisch stauchbaren Kopf (26) ausgestattet ist.

6. Wellgetriebe nach dem vorangehenden Anspruch, **dadurch gekennzeichnet, daß** der Kopf (26) eines jeden Stößels (21) als Hohlkörper nach Art eines sich achsparallel erstreckenden Hohlzylinder-Ausschnittes ausgelegt ist, dessen vom Schaft (22) sich peripher aufspreizenden Seitenwände (27) an ihren von der Drehachse (24) fort weisenden Stirnenden durch eine Bogenwand (32) miteinander verbunden sind, die einen Abschnitt der elastisch verformbaren Außenmantelfläche (17) des Innenrades (15) bildet.

7. Innenrad (15) für ein Wellgetriebe (12) mit einem um seine Achse (24) rotierenden Triebkern (14) unrunden Querschnittes zum koaxialen Abwälzen einer ihn umgebenden, radial verformbaren radreifenförmigen Folge von miteinander gelenkig verbundenen Bögen in einem formstabilen Stützring (11) etwas größeren Durchmessers, **dadurch gekennzeichnet, daß** das Innenrad (15) aus im Kreisbogen einander benachbart gelenkig miteinander verbundenen einzelnen Stößeln (21) erstellt ist, deren jeweiliger Schaft (22) etwa mittig zwischen seinem Fuß (23) und seinem Kopf (26) mit seitlich in peripherer Richtung vorkragenden Anschlußprofilen (30, 31) für wechselseitige gelenkige Verbindungen untereinander ausgestattet ist.

## Claims

1. Harmonic drive (12), with a driving core (14) of non-round cross section, rotating about its axis (24), for the coaxial rolling of a radially deformable succession of arcs, connected to one another in an articulated manner, in a dimensionally stable supporting ring (11) of somewhat larger diameter, the said succession surrounding the said driving core and being in the form of a wheel tyre, **characterized in that** individual tappets (21) oriented radially in a spoke-like manner compose an internal wheel (15), the tappet shanks (22) of which are equipped with feet (23) which are supported transversally to axis (24) on the outer surface (25) of the driving core (14) and are equipped on the opposite side with heads (26), having in each case an arcuate wall (32), and, approximately centrally between these, with connecting profiles (30, 31) which project laterally one under the other in the peripheral direction for alternate articulated connections of the tappets (21).

2. Harmonic drive according to Claim 1, **characterized in that** connection profiles (30, 31) of a tappet (21) which are located on both sides are formed, offset relative to one another parallel to the axis of rotation (24), on the free end faces of peripherally projecting arms (28, 29), short in relation to the radial length of the tappets (21), in the middle region of the said tappets.

3. Harmonic drive according to the preceding claim, **characterized in that** the connecting profiles (30, 31) are rings for receiving a pivot.

4. Harmonic drive according to the preceding claim, **characterized in that** the connecting profiles (30, 31) of a tappet (21) are, on the one hand, an axially parallel hole and, on the other hand, an axially parallel pin for engagement into such a hole.

5. Harmonic drive according to one of the preceding claims, **characterized in that** the respective shank (22) is equipped, opposite the foot (23) facing the axis of rotation (24) of the driving core (14) and of the internal wheel (15), with a peripherally widening head (26) which is elastically compressible radially with respect to the axis of rotation (24).

6. Harmonic drive according to the preceding claim, **characterized in that** the head (26) of each tappet (21) is designed as a hollow body in the manner of the hollow-cylindrical cutout which extends axially parallel and of which the side walls (27) spreading open peripherally from the shank (22) are connected to one another, on their end faces pointing away from the axis of rotation (24), by means of an arcuate wall (32) which forms a portion of the elastically deformable outer surface area (17) of the internal wheel (15).

7. Internal wheel (15) for a harmonic drive (12), with a driving core (14) of non-round cross section, rotating about its axis (24), through the coaxial rolling of a radially deformable succession of arcs, connected to one another in an articulated manner, in a dimensionally stable supporting ring (11) of somewhat larger diameter, the said succession surrounding the said driving core and being in the form of a wheel tyre, **characterized in that** the internal wheel (15) is produced from individual tappets (21) which, adjacent to one another in an arc of a circle, are connected to one another in an articulated manner and the respective shank (22) of which is equipped approximately centrally between its foot (23) and its head (26) with connection profiles (30, 31), projecting laterally in the peripheral direction, for alternate articulated connections to one another.

## Revendications

1. Réducteur elliptique (12) avec un noyau d'entraînement (14) de section ovale tournant autour de son axe (24) destiné à faire tourner coaxialement une série d'arcs déformable dans une direction radiale et entourant ledit noyau en forme de bandage de roue, lesdits arcs étant disposés et articulés entre eux dans une bague de support indéformable (11) d'un diamètre un peu plus grand, **caractérisé en ce qu'**une roue à denture intérieure (15) est composée de différents coulisseaux (21) orientés radialement et disposés en rayons dont les tiges (22) sont munies de bases (23) qui sont en appui transversal par rapport à l'axe (24) sur la face extérieure (25) du noyau d'entraînement (14) et sont situées en regard de têtes (26) comportant chacune une paroi courbe (32) et de profilés de raccordement (30, 31) disposés à peu près au centre entre les deux et s'étendant latéralement en saillie dans la direction circonférentielle pour relier et articuler entre eux les coulisseaux (21).

2. Réducteur elliptique selon la revendication 1, **caractérisé en ce que** des profilés de raccordement (30, 31) situés de part et d'autre d'un coulisseau (21) et décalés les uns par rapport aux autres parallèlement à l'axe de rotation (24) sont conformés dans la zone centrale des coulisseaux (21) sur les extrémités libres de bras (28, 29) qui sont courts par rapport à la longueur radiale des coulisseaux (21) et s'étendent en saillie dans la direction circonférentielle.

3. Réducteur elliptique selon la revendication précédente, **caractérisé en ce que** les profilés de raccordement (30, 31) sont des anneaux destinés à recevoir un tourillon.

4. Réducteur elliptique selon la revendication précédant la revendication précédente, **caractérisé en ce que** les profilés de raccordement (30, 31) d'un coulisseau (21) sont d'une part un trou parallèle à l'axe et d'autre part une goupille parallèle à l'axe et destinée à s'engager dans un tel trou.

5. Réducteur elliptique selon l'une quelconque des revendications précédentes, **caractérisé en ce que** chaque tige (22) est munie, du côté opposé à la base (23) tournée vers l'axe de rotation (24) du noyau d'entraînement (14) et de la roue à denture intérieure (15), d'une tête (26) qui va s'élargissant suivant la direction circonférentielle et est élastiquement compressible selon la direction radiale par rapport à l'axe de rotation (24).

6. Réducteur elliptique selon la revendication précédente, **caractérisé en ce que** la tête (26) de chacun des coulisseaux (21) est conformée en forme de corps creux du type consistant en une partie de cylindre creux qui s'étend parallèlement à l'axe et dont les parois latérales (27), qui s'évasent dans la direction circonférentielle à partir de la tige (22), sont reliées à leurs extrémités détournées de l'axe de rotation (24) par une paroi courbe (32) qui forme un segment de la surface latérale extérieure (17) élastiquement déformable de la roue à denture intérieure (15).

7. Roue à denture intérieure (15) pour un réducteur elliptique (12) avec un noyau d'entraînement (14) de section ovale tournant autour de son axe (24) destiné à faire tourner coaxialement une série d'arcs déformable selon une direction radiale et entourant ledit noyau en forme de bandage de roue, lesdits arcs étant disposés et articulés entre eux dans une bague de support indéformable (11) d'un diamètre un peu plus grand, **caractérisée en ce que** la roue à denture intérieure (15) est constituée de différents coulisseaux (21) adjacents articulés disposés en arc de cercle dont la tige (22) est munie, à peu près au centre entre sa base (23) et sa tête (26), de profilés de raccordement (30, 31) qui s'étendent latéralement en saillie dans la direction circonférentielle et sont destinés à relier et articuler entre eux lesdits coulisseaux.
